# EUROPEAN PATENT APPLICATION

(11) **EP 4 357 043 A1**
(43) Date of publication of application: **24.04.2024**
(21) Application number: 22885826.2
(22) Date of filing: 21.10.2022
(51) Int. Cl.: B21D 19/04, H01M 4/04

(54) **POLE PIECE BURR REPAIRING DEVICE**

(30) Priority: 28.10.2021 CN 202122601315 U
(71) Applicant: Contemporary Amperex Technology Co., Limited, Ningde, Fujian 352100 (CN)
(72) Inventor: LI, Hao, Ningde, Fujian 352100 (CN); LI, Xiaowei, Ningde, Fujian 352100 (CN); PEI, Zhenxing, Ningde, Fujian 352100 (CN); SONG, Yingjun, Ningde, Fujian 352100 (CN)
(74) Representative: Gong, Jinping
(86) International application number: PCT/CN2022/126819
(87) International publication number: WO 2023/071949

(57) **Abstract**

A device for repairing burrs of an electrode plate is provided, which includes a plurality of shaping rollers (20), wherein a shaping surface (221) is formed on an outer surface of each of the shaping rollers (20), and along a conveying direction of an electrode plate (10), included angles between the plurality of shaping surfaces (221) and a surface of the electrode plate (10) decrease in sequence. The device for repairing burrs of an electrode plate gradually decreases the angle between the burrs and the electrode plate until the burrs are flattened, and the end-surface burrs are finally transformed into flat-surface burrs, thereby reducing the safety risk of batteries.

## Description

### Cross-reference

The present application claims priority to Chinese patent application No. 202122601315. X filed with the China National Intellectual Property Administration on October 28, 2021 and entitled "DEVICE FOR REPAIRING BURRS OF ELECTRODE PLATE", which is incorporated herein by reference in its entirety.

### Technical Field

The present application relates to the technical field of battery production equipment, and in particular to a device for repairing burrs of an electrode plate.

### Background

During a battery production process, when electrode plates are being slit, if a slitting knife is worn or a knife die shakes, it is likely to produce flat-surface burrs (parallel to the electrode plate) or end-surface burrs (perpendicular to the electrode plate) on edges of the electrode plates. Under the current production technology, it is impossible to ensure that the burrs can be completely removed without damaging the electrode plates. After these electrode plates with burrs are assembled into batteries, they are very likely to pierce separators and cause a short circuit. The end-surface burrs are much more harmful than the flat-surface burrs.

### Summary of the Invention

In view of the above problems, the present application provides a device for repairing burrs of an electrode plate to solve the technical problems in the prior art, which can transform harmful end-surface burrs into less harmful flat-surface burrs, thereby reducing the safety risk of batteries in the market.

In a first aspect, the present application provides a device for repairing burrs of an electrode plate, the device including a plurality of shaping rollers arranged in sequence along a conveying direction of the electrode plate, wherein the shaping rollers each include a main body portion and a shaping portion which are coaxially connected to each other, a shaping surface is formed on an outer surface of the shaping portion, the shaping surface includes a first end portion connected to the main body portion and a second end portion located away from the main body portion, the second end portion is closer to an axis of the shaping portion than the first end portion, and along the conveying direction of the electrode plate, included angles between the plurality of shaping surfaces and a surface of the electrode plate decrease in sequence.

In the technical solution of the embodiment of the present application, the plurality of shaping rollers are arranged in the conveying direction of the electrode plate, the shaping rollers each include a main body portion and a shaping portion, the main body portion abuts against and clamps the surface of the electrode plate to stabilize the position of the electrode plate, the shaping portion is located at an end portion of the main body portion to flatten the burrs on the electrode plate, and on a conveying path of the electrode plate, the plurality of shaping surfaces are in contact with the burrs on the electrode plate in sequence. Since the included angles between the plurality of the shaping surfaces and the surface of the electrode plate decrease in sequence, there is a gradient change, so that the angle between the burrs and the electrode plate gradually decreases while the burrs are directed outwardly, until the burrs are flattened, and the end-surface burrs are finally transformed into flat-surface burrs, thereby reducing the safety risk of batteries in the market.

In some embodiments, along the conveying direction of the electrode plate, the included angle between the terminal shaping surface and the surface of the electrode plate is equal to 0°. The shaping surface of the terminal shaping roller is kept parallel to the surface of the electrode plate and abuts against the surface of the electrode plate, so that when the electrode plate passes, the burrs are flattened to be parallel to the surface of the electrode plate, reducing the probability of short circuit caused by the pierced separator, and ensuring the repairing effect.

In some embodiments, there are four shaping surfaces, and along the conveying direction of the electrode plate, the included angles between the four shaping surfaces and the surface of the electrode plate decrease with a constant gradient. Inclination angles of the four shaping surfaces change in a gradient manner. At the starting shaping surface, an orientation angle of an end-surface burr is changed such that it faces outward. At the two intermediate shaping surfaces, the angle between the burr and the electrode plate decreases gradually while the burr is orientated outwardly. At the terminal shaping surface, the burr is flattened, such that the end-surface burr is finally transformed into a flat-surface burr.

In some embodiments, along the conveying direction of the electrode plate, the included angles between the four shaping surfaces and the surface of the electrode plate are respectively 45°, 30°, 15° and 0°. The difference in the inclination angles of two adjacent gradient shaping surfaces is small, so that the burrs can be flattened gradually and smoothly, avoiding flattening and turning the burrs at a large angle, which may cause the burrs to break and warp.

In some embodiments, a plurality of shaping rollers are provided on upper and lower sides of the electrode plate. The shaping rollers on the upper side of the electrode plate are configured to repair the upturned burrs of the electrode plate, and the shaping rollers on the upper side of the electrode plate are configured to repair the downturned burrs of the electrode plate, so that the repairing and flattening operations are performed simultaneously on the upper and lower sides, and the repairing operation on the upturned and downturned burrs can be completed only by conveying the electrode plate once in a single direction, thereby improving the repair efficiency.

In some embodiments, there are two shaping portions, which are symmetrically arranged at two axial ends of the main body portion. In this way, the burrs on the left and right sides of a single electrode plate can be repaired and flattened simultaneously.

In some embodiments, the shaping portions are of a cone structure. It is easy to form and machine, and the use of a smooth outer surface of the cone structure to contact and flatten the burrs prevents local damage to the burrs during the flattening.

In some embodiments, the plurality of shaping rollers are rotated at the same speed by a driving component, and a linear speed of the plurality of shaping rollers is equal to a conveying speed of the electrode plate. The driving component adjusts the linear speed of the shaping rollers to be equal to the conveying speed of the electrode plate, thereby avoiding relative displacement between the shaping rollers and the surface of the electrode plate, which otherwise would damage a coating on the surface of the electrode plate.

In some embodiments, the driving component comprises a driving motor, a driving shaft and driven shafts, there are a plurality of driven shafts, which correspond to the plurality of shaping rollers on a one-to-one basis, the shaping rollers are each concentrically fixed to the respective driven shaft, an output end of the driving motor is drivingly connected to the driving shaft, and the driving shaft is drivingly connected to the plurality of driven shafts. The driving force of the driving motor is transmitted to each driven shaft through the driving shaft, so that the shaping rollers on the respective driven shafts rotate synchronously. The structure is compact, stable and efficient.

In some embodiments, the shaping rollers are made of stainless steel or rubber. In this way, the shaping rollers are easy to machine and manufacture, and the overall strength is improved.

The above description is only a summary of the technical solutions of the present application. In order to be able to understand the technical means of the present application more clearly, the technical means can be implemented according to the content of the specification. Furthermore, to make the above and other objectives, features and advantages of the present application more comprehensible, specific implementations of the present application are exemplified below.

### Description of Drawings

By reading the detailed description of the preferred implementations below, various other advantages and benefits will become apparent to those of ordinary skill in the art. The drawings are for the purpose of illustrating the preferred implementations only and are not to be considered a limitation to the present application. Moreover, in all of the drawings, the same components are indicated by the same reference signs. In the drawings:
Fig. 1 is a schematic diagram of burrs at edges of an electrode plate of a battery in the prior art;
Fig. 2 is a schematic structural diagram of a device for treating burrs of an electrode plate in the prior art;
Fig. 3 is an isometric view of the overall structure according to an embodiment of the present application; and
Fig. 4 is a schematic structural diagram of a working state according to an embodiment of the present application.

In the accompanying drawings, the figures are not necessarily drawn to scale.

The reference signs in Detailed Description are as follows:
10 - electrode plate;
20 - shaping roller, 21 - main body portion, 22 - shaping portion, 221 - shaping surface;
30 - driving component, 31 - driving motor, 32 - driving shaft, 33 - driven shaft.

In the prior art:
1 - electrode plate, 3 - metal foil, 4 - burr, 5 - upper rolling wheel, 9 - lower rolling wheel.

### Detailed Description

Embodiments of the technical solutions of the present application will be described in detail below with reference to the accompanying drawings. The following embodiments are only used to more clearly illustrate the technical solution of the present application, and therefore are only used as examples and cannot be used to limit the scope of protection of the present application.

Unless otherwise defined, all technical and scientific terms used herein have the same meaning as commonly understood by those skilled in the art belonging to the technical field of the present application; the terms used herein are intended only for the purpose of describing specific embodiments and are not intended to limit the present application; the terms " including" and "having" and any variations thereof in the specification and the claims of the present application and in the description of drawings above are intended to cover non-exclusive inclusion.

In the description of the embodiments of the present application, the technical terms "first", "second", and the like are used only to distinguish between different objects, and are not to be understood as indicating or implying a relative importance or implicitly specifying the number, particular order, or primary and secondary relation of the technical features indicated. In the description of the embodiments of the present application, the meaning of "a plurality of" is two or more, unless otherwise explicitly and specifically defined.

Reference herein to "an embodiment" means that a particular feature, structure, or characteristic described in connection with the embodiment can be included in at least one embodiment of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the embodiments of the present application, the term "and/or" is simply a description of an association of associated objects, which indicates that there may exist three relationships, for example, A and/or B may represent three situations: A exists alone, both A and B exist, and B exists alone. In addition, the character "/" herein generally indicates an "or" relationship between the associated objects.

In the description of the embodiments of the present application, the term "plurality of" refers to at least two (including two); similarly, "plurality of groups" refers to at least two (including two) groups, and "plurality of pieces" refers to at least two (including two) pieces.

In the description of the embodiments of the present application, the orientation or position relationships indicated by the technical terms "center", "longitudinal", "transverse", "length", "width", "thickness", "up", "down", "front", "back", "left", "right", "vertical", "horizontal", "top", "bottom", "inside", "outside", "clockwise", "counterclockwise", "axial", "radial", "peripheral" and the like are based on the orientation or position relationships shown in the drawings, and are only for convenience and simplification of the description of the embodiments of the present application, but do not indicate or imply that the apparatuses or elements referred to must have particular orientations, be constructed and operated in particular orientations, and therefore cannot be construed as a limitation of the embodiments of the present application.

In the description of the embodiments of the present application, unless otherwise expressly specified and limited, the technical terms "mounting," "connected," "connecting," "fixing", and the like shall be understood in a broad sense, which, for example, may be a fixed connection, or a detachable connection or an integral connection; may also be a mechanical connection, or an electrical connection; may be a direct connection, or an indirect connection through an intermediate medium, and may be a communication within two elements or an interactive relationship between two elements. For those of ordinary skill in the art, the specific meanings of the above terms in the embodiments of the present application can be understood according to specific situations.

An existing conventional battery includes a positive electrode plate and a negative electrode plate wound around each other (the positive electrode plate and the negative electrode plate are often referred to as electrode plates of the battery), and the positive electrode plate and the negative electrode plate further include metal foil sheets as positive and negative electrode conductors and active materials coated on surfaces of the metal foil sheets.

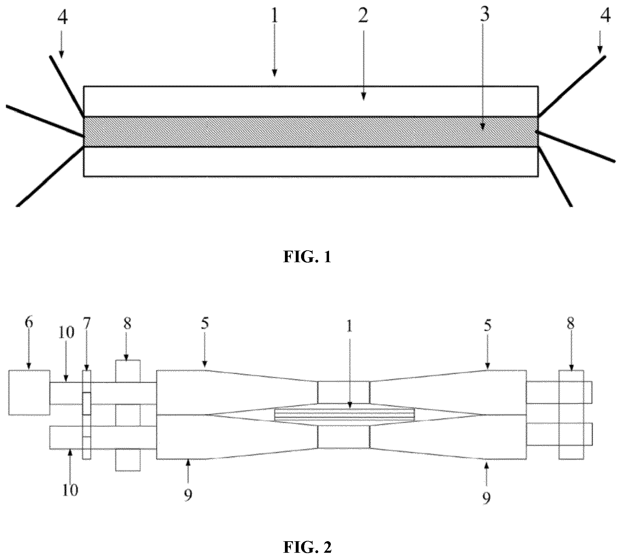

In the production process, a large electrode plate generally needs to be cut by a slitting machine into small electrode plates that meet a specified size. After the electrode plates are cut with an electrode plate slitting machine, edges of the electrode plates will have burrs which are inclined in various directions. Referring to Fig. 1, Fig. 1 is a schematic diagram of burrs at edges of an electrode plate of a battery in the prior art. The burrs are formed during shearing due to shear deformation and stretching of a metal foil 3 (copper foil or aluminum foil) used as a current collector. Although invisible to the naked eye, the burrs 4 are inclined in various directions and are very irregular when viewed through a microscope.

The burrs are very harmful. During an electrode winding process, the burrs are very likely to pierce a separator between two substrates and cause a short circuit in the battery, thereby greatly reducing the qualification rate of the battery. Furthermore, the burrs include end-surface burrs (perpendicular to the electrode plate) and flat-surface burrs (parallel to the electrode plate). The end-surface burrs are much more harmful than the flat-surface burrs.

Therefore, removing burrs from positive and negative electrode plates of a battery has become an important issue to be solved for the safety of the battery. In the prior art, a device for treating burrs of an electrode plate is also disclosed, as shown in Fig. 2. Fig. 2 is a schematic structural diagram of a device for treating burrs of an electrode plate in the prior art. This device includes an upper rolling wheel 5 and a lower rolling wheel 9 which are opposite to each other vertically. A certain gap is formed between the upper rolling wheel 5 and the lower rolling wheel 9. An electrode plate 1 having burrs at edges thereof is passed through the gap formed by the upper rolling wheel 5 and the lower rolling wheel 9. The burrs are squeezed by means of inclination angles of the upper rolling wheel 5 and the lower rolling wheel 9, so as to achieve the effect of flattening the burrs.

This device presses the burrs from the outside inward until the burrs have at two bent points. It is very likely to cause warping and form end-surface burrs, which are likely to puncture the separator and cause a short circuit, resulting in a great risk.

In view of this, the inventors have appreciated that the burrs could be pressed from the inside out to transform the harmful end-surface burrs into less harmful flat-surface burrs, thereby reducing the possibility that the burrs of the electrode plate inside the battery pierce the separator and cause the positive and negative electrode plates of the batter to come into contact with each other, and thus greatly improving the safety performance of the battery.

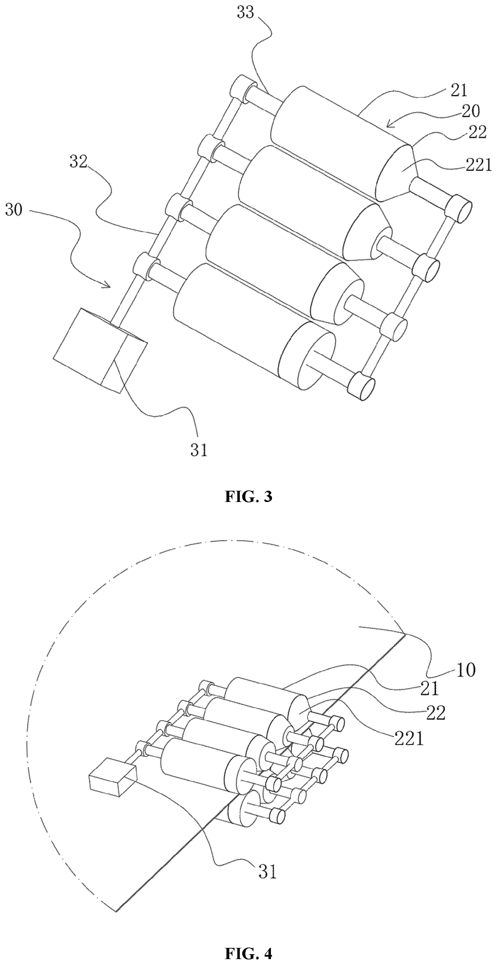

According to some embodiments of the present application, referring to Figs. 3 and 4, Fig. 3 is an isometric view of the overall structure according to an embodiment of the present application; and Fig. 4 is a schematic structural diagram of a working state according to an embodiment of the present application. The present application provides a device for repairing burrs of an electrode plate, the device including a plurality of shaping rollers 20. The shaping rollers 20 each include a main body portion 21 and a shaping portion 22 which are coaxially connected to each other, a shaping surface 221 is formed on an outer surface of the shaping portion 22, the shaping surface 221 includes a first end portion connected to the main body portion 21 and a second end portion located away from the main body portion 21, the second end portion is closer to an axis of the shaping portion 22 than the first end portion, and along a conveying direction of the electrode plate 10, included angles between the plurality of shaping surfaces 221 and a surface of the electrode plate 10 decrease in sequence.

The shaping roller 20 includes two portions, namely a main body portion 21 and a shaping portion 22. The main body portion 21 and the shaping portion 22 are preferably integrally formed to facilitate machining and manufacturing and improve the overall strength. It is preferred that the main body portion 21 is a circular shaft body, the main body portion 21 abuts against the surface of the electrode plate 10, the shaping portion 22 is coaxially connected to at least one end of the main body portion 21, and at least part of the shaping portion 22 protrudes from an edge of the electrode plate 10 to repair and flatten the burrs on a side of the electrode plate 10.

The outer surface of the shaping portion 22 forms the shaping surface 221, the first end portion of the shaping surface 221 is connected to the main body portion 21 and abuts against the surface of the electrode plate 10, and the second end portion of the shaping portion 22 is located at an axial end of the shaping roller 20. Since the second end portion of the shaping surface 221 is closer to the axis of the shaping portion 22 than the first end portion of the shaping surface 221, the diameter of the first end portion of the shaping surface 221 is greater than that of the second end portion of the shaping surface 221, and this defines the inclination direction of the shaping surface 221. The shaping portion 22 as a whole has a cone structure that is tapered from the inner side to the outer side of the electrode plate 10, so that when the shaping surface 221 comes into contact with and applies force to the burrs, the burrs turn from the inside out. This avoids the contact between the burrs and the surface of the electrode plate 10, which otherwise would cause more bent points during the turning, and subsequent technical problems of warping.

The plurality of shaping rollers 20 are arranged in sequence along the conveying direction of the electrode plate 10. During conveying, the electrode plate 10 comes into contact with the shaping surfaces 221 on the plurality of shaping rollers 20 in sequence. The shaping surfaces 221 are each in contact with the burrs protruding from the surface of the electrode plate 10, to provide the burrs with a force in the direction of the electrode plate 10, so that the burrs are turned at a certain angle from the inside out in the direction of the electrode plate 10. Along the conveying direction of the electrode plate 10, the included angles between the plurality of shaping surfaces 221 and the surface of the electrode plate 10 decrease in sequence, that is, the further back the shaping surface 221 is located, the smaller the inclination angle thereof, and the closer the second end portion of the shaping surface 221 to the surface of the electrode plate 10. During the conveying, after the burrs have been flattened by the plurality of shaping surfaces 221, the burrs are parallel to the surface of the electrode plate 10 and thus form flat-surface burrs, thereby greatly reducing the possibility that the burrs of the electrode plate 10 inside the battery pierce the separator and cause the positive and negative electrode plates 10 of the battery to come into contact with each other, and thus greatly improving the safety performance of the battery.

According to some embodiments of the present application, optionally, as shown in Figs. 3 and 4, along the conveying direction of the electrode plate 10, the included angle between the terminal shaping surface 221 and the surface of the electrode plate 10 is equal to 0°.

An extending direction of the shaping surface 221 of the terminal shaping roller 20 is parallel to an axial direction of the shaping portion 22, that is, the shaping surface 221 is flush with an outer contour surface of the main body portion 21, and the shaping surface 221 of the shaping portion 22 also abuts against the surface of the electrode plate 10 together with the main body portion 21, so that the free ends of the burrs are lower than the surface of the electrode plate 10, while maintaining a horizontal state, thereby forming flat-surface burrs, and reducing the probability of short circuit caused by the pierced separator.

According to some embodiments of the present application, optionally, referring to Figs. 3 and 4, there are four shaping surfaces 221, and along the conveying direction of the electrode plate 10, the included angles between the four shaping surfaces 221 and the surface of the electrode plate 10 decrease with a constant gradient.

The four shaping rollers 20 are provided along the conveying direction of the electrode plate 10, and the included angles between the shaping surfaces 221 formed on the four shaping rollers 20 and the surface of the electrode plate 10 decrease with a constant gradient. At the starting shaping surface 221, an orientation angle of an end-surface burr is changed such that it faces outward. At the two intermediate shaping surfaces 221, the angle between the burr and the electrode plate 10 decreases gradually while the burr is orientated outwardly. At the terminal shaping surface 221, the burr is flattened, such that the end-surface burr is finally transformed into a flat-surface burr.

It can be appreciated by those skilled in the art that the number of shaping rollers 20 is not limited to four. The number of shaping rollers 20 can be increased or decreased according to actual process requirements and cost considerations. When the number of shaping rollers 20 is increased, the difference in the inclination angles of the shaping surfaces 221 formed on two adjacent shaping rollers 20 becomes smaller, the forced turning process of the burrs becomes smoother, and the angle of each turning is also reduced, so that the turning and breakage of the burrs caused by a large-angle turning can be avoided.

According to some embodiments of the present application, optionally, still referring to Figs. 3 to 5, along the conveying direction of the electrode plate 10, the included angles between the four shaping surfaces 221 and the surface of the electrode plate 10 are respectively 45°, 30°, 15° and 0°.

At the starting shaping surface 221, an orientation angle of an end-surface burr is changed such that it faces outward, and the orientation angle of the burr is less than or equal to 45°. At the two intermediate shaping surfaces 221, the angle between the burr and the electrode plate 10 decreases gradually while the burr is orientated outwardly, such that the orientation angle of the burr is gradually less than 15°. At the terminal shaping surface 221, the burr is flattened, such that the end-surface burr is finally transformed into a flat-surface burr.

The inclination angles of two adjacent gradient shaping surfaces 221 differ by 15°, so that the burrs can be flattened gradually and smoothly, avoiding flattening and turning the burrs at a large angle, which may cause the burrs to break and warp.

It can be appreciated by those skilled in the art that the inclination angle of each shaping surface 221 is not limited to the above definition. The inclination angle can be increased or decreased according to the actual situation, and the difference between the inclination angles of two adjacent gradient shaping surfaces 221 can be adjusted.

According to some embodiments of the present application, optionally, referring to Fig. 5, a plurality of shaping rollers 20 are provided on upper and lower sides of the electrode plate 10.

The shaping rollers 20 on the upper side of the electrode plate 10 are located on an upper surface of the electrode plate 10, and the shaping rollers 20 on the lower side of the electrode plate 10 are located on a lower surface of the electrode plate 10. The plurality of shaping rollers 20 on the upper and lower sides of the electrode plate 10 are symmetrically arranged and both are arranged at intervals along the conveying direction of the electrode plate 10. A passage gap is formed between the shaping rollers 20 on the upper and lower sides for the electrode plate 10 to pass through.

The shaping rollers 20 located on the upper side of the electrode plate 10 are each configured to repair the upturned burrs of the electrode plate 10, the main body portion 21 thereof abuts against the upper surface of the electrode plate 10, the shaping portion 22 thereof protrudes from the edge of the electrode plate 10, and the shaping surface 221 on the shaping portion 22 bear against the burrs, causing the upturned burrs to turn downward until they are flattened.

The shaping rollers 20 located on the upper side of the electrode plate 10 are each configured to repair the downturned burrs of the electrode plate 10, the main body portion 21 thereof abuts against the lower surface of the electrode plate 10, the shaping portion 22 thereof protrudes from the edge of the electrode plate 10, and the shaping surface 221 on the shaping portion 22 bear against the burrs, causing the downturned burrs to turn upward until they are flattened.

The repairing and flattening operations are performed simultaneously on the upper and lower sides, and the repairing operation on the upturned and downturned burrs can be completed only by conveying the electrode plate 10 once in a single direction, thereby improving the repair efficiency. Moreover, the passage gap formed between the shaping rollers 20 on the upper and lower sides is adjustable, and is compatible with electrode plates 10 of different widths.

According to some embodiments of the present application, optionally, two shaping portions 22 are provided, and the two shaping portions 22 are symmetrically arranged at two axial ends of the main body portion 21.

If a shaping portion 22 is provided at one end of the main body portion 21, only the burrs on the left or right side can be repaired during a single transfer of the electrode plate 10, whereas if shaping portions 22 are provided at both axial ends of the main body portion 21, the burrs on the left and right sides of a single electrode plate 10 can be repaired and flattened simultaneously, thereby improving the repair efficiency.

According to some embodiments of the present application, optionally, the shaping portions 22 are of a cone structure.

When the inclination angle of the shaping surface 221 is not 0°, the shaping portion 22 is of a cone structure. The shaping surface 221 is formed on an outer circumferential surface of the cone structure. The large-diameter end of the cone structure is connected to the main body portion 21, and the small-diameter end of the cone structure extends toward the side away from the main body portion 21. The cone structure is easy to form and machine, and the use of a smooth outer surface of the cone structure to contact and flatten the burrs prevents local damage to the burrs during the flattening.

When the inclination angle of the shaping surface 221 is 0°, the shaping portion 22 is of a cylindrical structure. The diameter of the cylindrical structure is equal to that of the main body portion 21. The shaping surface 221 is formed at an outer circumferential surface of the cone cylindrical structure, and the shaping surface 221 abuts against the surface of the electrode plate 10 to flatten the burrs.

According to some embodiments of the present application, optionally, the plurality of shaping rollers 20 are rotated at the same speed by a driving component 30, and a linear speed of the plurality of shaping rollers 20 is equal to a conveying speed of the electrode plate 10.

The driving component 30 adjusts the linear speed of the shaping rollers 20 to be equal to the conveying speed of the electrode plate 10, thereby avoiding relative displacement between the shaping rollers 20 and the surface of the electrode plate 10, which otherwise would damage a coating on the surface of the electrode plate 10.

According to some embodiments of the present application, optionally, as shown in Fig. 3, the driving component 30 includes a driving motor 31, a driving shaft 32 and driven shafts 33. There are a plurality of driven shafts 33, the plurality of driven shafts 33 correspond to the plurality of shaping rollers 20 on a one-to-one basis, the shaping rollers 20 are each concentrically fixed to the respective driven shaft 33, an output end of the driving motor 31 is drivingly connected to the driving shaft 32, and the driving shaft 32 is drivingly connected to the plurality of driven shafts 33.

Both the driving shaft 32 and the driven shafts 33 are rotatably supported on a base surface via bearing seats. The output shaft of the driving motor 31 is connected to the driving shaft 32 via a speed reducer. The transmission mode between the driving shaft 32 and the driven shafts 33 can refer to the transmission mode in the prior art, such as the meshing mode of two bevel gears, which is not limited here. The driving motor 31 works to drive the driving shaft 32 to rotate, the driving shaft 32 then drives the driven shafts 33 to rotate, so that the linear speed of the shaping rollers 20 remains consistent with the conveying speed of the electrode plate 10. The upper and lower sets of shaping rollers 20 may also clamp the electrode plate 10 to drive the conveying of the electrode plate. During the conveying of the electrode plate 10, the flattening and shaping operations on the burrs of the electrode plate 10 are completed.

It can be appreciated by those skilled in the art that the driving component 30 can not only rely on the driving mode of the driving motor 31, but can also be other types of driving force, such as the cooperation of a driving cylinder with a driving bar and a driving gear, as long as the synchronous rotation of the plurality of shaping rollers 20 can be achieved, which is no limited here.

In some embodiments, optionally, the shaping rollers 20 are made of stainless steel or rubber. In this way, the shaping rollers 20 are easy to machine and manufacture, and the overall strength is improved.

Finally, it should be noted that the above embodiments are merely used for illustrating rather than limiting the technical solutions of the present application. Although the present application has been described in detail with reference to the above various embodiments, those of ordinary skill in the art should understand that the technical solutions specified in the above various embodiments can still be modified, or some or all of the technical features therein can be equivalently substituted; and such modifications or substitutions do not make the essence of the corresponding technical solutions depart from the scope of the technical solutions of the various embodiments of the present application, which shall fall within the scope of the claims and the specification of the present application. In particular, the technical features mentioned in the various embodiments can be combined in any manner as long as there is no structural conflict. The present application is not limited to the specific embodiments disclosed herein, but rather includes all technical solutions falling within the scope of the claims.

## Claims

1. A device for repairing burrs of an electrode plate, the device comprising a plurality of shaping rollers arranged in sequence along a conveying direction of the electrode plate, wherein the shaping rollers each comprise a main body portion and a shaping portion which are coaxially connected to each other, a shaping surface is formed on an outer surface of the shaping portion, the shaping surface comprises a first end portion connected to the main body portion and a second end portion located away from the main body portion, the second end portion is closer to an axis of the shaping portion than the first end portion, and along the conveying direction of the electrode plate, included angles between the plurality of shaping surfaces and a surface of the electrode plate decrease in sequence.

2. The device for repairing burrs of an electrode plate according to claim 1, wherein along the conveying direction of the electrode plate, the included angle between the terminal shaping surface and the surface of the electrode plate is equal to 0°.

3. The device for repairing burrs of an electrode plate according to claim 1 or 2, wherein there are four shaping surfaces, and along the conveying direction of the electrode plate, the included angles between the four shaping surfaces and the surface of the electrode plate decrease with a constant gradient.

4. The device for repairing burrs of an electrode plate according to claim 3, wherein along the conveying direction of the electrode plate, the included angles between the four shaping surfaces and the surface of the electrode plate are respectively 45°, 30°, 15° and 0°.

5. The device for repairing burrs of an electrode plate according to any one of claims 1 to 4, wherein a plurality of shaping rollers are provided on upper and lower sides of the electrode plate.

6. The device for repairing burrs of an electrode plate according to any one of claims 1 to 5, wherein there are two shaping portions, which are symmetrically arranged at two axial ends of the main body portion.

7. The device for repairing burrs of an electrode plate according to any one of claims 1 to 6, wherein the shaping portions are of a cone structure.

8. The device for repairing burrs of an electrode plate according to any one of claims 1 to 7, wherein the shaping portion corresponding to the shaping surface which has an included angle of 0° with the surface of the electrode plate is of a cylindrical structure, wherein the diameter of the cylindrical structure is equal to that of the main body portion, and the shaping surface is formed at an outer circumferential surface of the cylindrical structure.

9. The device for repairing burrs of an electrode plate according to any one of claims 1 to 8, wherein the main body portion is a circular shaft body, the main body portion abuts against the surface of the electrode plate, the shaping portion is coaxially connected to at least one end of the main body portion, and at least part of the shaping portion protrudes from an edge of the electrode plate to repair and flatten the burrs on a side of the electrode plate.

10. The device for repairing burrs of an electrode plate according to any one of claims 1 to 9, wherein the plurality of shaping rollers are rotated at the same speed by a driving component, and a linear speed of the plurality of shaping rollers is equal to a conveying speed of the electrode plate.

11. The device for repairing burrs of an electrode plate according to claim 10, wherein the driving component comprises a driving motor, a driving shaft and driven shafts, there are a plurality of driven shafts, which correspond to the plurality of shaping rollers on a one-to-one basis, the shaping rollers are each concentrically fixed to the respective driven shaft, an output end of the driving motor is drivingly connected to the driving shaft, and the driving shaft is drivingly connected to the plurality of driven shafts.

12. The device for repairing burrs of an electrode plate according to any one of claims 1 to 11, wherein the shaping rollers are made of stainless steel or rubber.
